# EUROPEAN PATENT SPECIFICATION

(11) **EP 4 069 969 B1**
(45) Date of publication and mention of the grant of the patent: **16.07.2025**
(21) Application number: 20825199.1
(22) Date of filing: 03.12.2020
(51) Int. Cl.: F03D 9/00, F03D 13/25, F03D 9/10, F03B 13/12, B63B 35/44, B63B 1/10, B63B 1/14, B63B 21/50

(54) **BUOYANT PLATFORM**
SCHWIMMENDE PLATTFORM
PLATEFORME FLOTTANTE

(30) Priority: 06.12.2019 GB 201917915; 14.08.2020 GB 202012716
(43) Date of publication of application: 12.10.2022
(73) Proprietor: Marine Power Systems Limited, Swansea SA1 2AQ (GB)
(72) Inventor: FOSTER, Graham, Swansea Enterprise Park Swansea SA6 8RT (GB)
(74) Representative: Murgitroyd & Company
(86) International application number: PCT/GB2020/053102
(87) International publication number: WO 2021/111138

(56) References cited:
- WO-A1-2013/040871
- WO-A1-2019/229476
- CN-A- 106 014 862
- CN-A- 109 026 542
- CN-A- 109 185 066
- CN-A- 110 296 049

## Description

### Field of the Invention

The present invention relates to a buoyant offshore renewable energy system mounting platform.

### Background to the Invention

In recent years, there has been increased emphasis on the need to exploit renewable energy so that it significantly contributes to global energy production. A combination of government targets, media representation of the issues associated with non-renewable energy sources, and ever increasing energy costs have all created a powerful driving force for the development of renewable energy systems.

Negative impacts of fossil fuels on the environment are well known, as are the problems and high costs associated with nuclear energy. Harnessing of the huge natural abundance of renewable energy on the other hand is constrained merely by our capability of capturing and supplying it at an economically viable price.

One potential renewable energy source is wave power - an abundant and consistent energy resource available in all of the world's large oceans and seas. Another is wind power, with wind speeds being higher and more consistent over oceans and seas compared to land.

For these reasons, offshore platforms providing means to mount renewable energy devices which harness wave and/or wind power are required.

Adequate buoyancy to support the heavy offshore platform, good stability of the platform and means to mount the renewable energy devices to the platform are required. Problems with known offshore platforms include a failure to successfully provide the above. Known offshore platforms have potential for further improvement.

WO2013/040871A1 describes a pre-stressed concrete floating platform for supporting an offshore wind turbine and marine energy converter.

WO2019/229476A1 describes a buoyant energy converting apparatus for converting energy obtained from renewable ocean energy sources to useful energy.

### Summary of the Invention

The present invention is directed to a buoyant platform arranged to support a renewable energy device which may be used for one or more of: renewable energy capture or harnessing, renewable energy processing, renewable energy storing, renewable energy data capture and/or data storing. In particular the present invention is directed to a buoyant platform having improved modularity, and improved stability when positioned in an in-use configuration within a body of water.

In accordance with an aspect of the present invention, there is provided a buoyant offshore renewable energy system mounting platform for positioning a renewable energy device in a body of water as claimed in claim 1.

It will be understood that the at least one of said buoyancy members comprises a renewable energy device such that the renewable energy device is at least partially attached or affixed thereto, at least partially supported thereon, and/or at least partially accommodated therewithin. The present invention is therefore preferably arranged to combine a buoyancy of said one or more buoyancy members with a weight of a respective renewable energy device such that the respective forces are optimally counteracted with minimal remaining residual internal forces acting on the platform such that stability is maximised. Such preferable improved stability is intended to maximise safety and utility of the platform, which may include capturing, conversion and/or storing of renewable energy, such as wave, tidal and/or wind energy.

In some preferable embodiments, at least three of the at least three vertexes comprise at least one mooring member, which may preferably provide optimum stability to the platform in-use.

In some preferable embodiments, said renewable energy convertor comprises one selected from: a wave energy convertor system (WEC); a tidal energy convertor system; a wind energy convertor system. The WEC can in some embodiments comprise of any suitable type of WEC design, for example a point absorber, an oscillating wave surge absorber, or a submerged pressure differential absorber. In some preferable embodiments, said renewable energy harnessing apparatus comprises one selected from: a wave energy convertor; a tidal energy converter; a wind turbine. The tidal energy converter may comprise any suitable tidal energy converter and may, for example, comprise a tidal turbine having a horizontal axis turbine or a vertical axis turbine. The wind energy converter may be any suitable wind energy converter and may for example comprise a wind turbine. In some preferable embodiments, the renewable energy processing apparatus comprises a hydrogen electrolyser. Embodiments will be appreciated wherein any suitable renewable energy processing apparatus is provided which is arranged to generate a secondary resource from energy harnessed and/or stored. In embodiments that comprise hydrogen generation, electricity may be generated by any renewable energy harnessing and/or converting apparatuses which may be attached to, affixed to, support on, or housed within the invention, which can then be used to generate hydrogen, singly or in combination.

The renewable energy device is engaged with the buoyancy member by an engagement means, wherein the renewable energy device is removable from the buoyancy member by way of the engagement means. The engagement means may be any suitable engagement means providing secure attachment or affixing of the renewable energy device to the respective buoyancy member such that maximum stability is said attachment or affixing is provided. The engagement means preferably supports the modularity of the present invention such that a variety of desirable configurations of platforms with renewable energy devices may be achieved. In some embodiments, the buoyancy member may be engaged with the framework by an engagement means. In such embodiments, a similar modularity is provided, particularly wherein buoyancy members may be adapted to comprise a specific type of renewable energy device. A change in configuration to provide a platform having a different renewable energy device configuration may therefore involve a removal of a buoyancy member adapted to comprise a specific renewable energy device, and replacement with a buoyancy member adapted to comprise a different renewable energy device.

In some preferable embodiments, the platform may further comprise a conveying means extending therefrom, the conveying means arranged to convey one or more resources from the platform. The one or more resources, in some preferable embodiments, may for example comprise: electricity which may be generated by a renewable energy harnessing and/or converting apparatus of the platform and/or stored by a renewable energy storing apparatus of the platform; a secondary resource, such as hydrogen, which may be generated by a renewable energy processing apparatus of the platform. In embodiments wherein the resource comprises electricity, the conveying means is preferably a suitable cable, such as a power cable. In embodiments wherein the resource comprises hydrogen, the conveying means is preferably any suitable conveying means, such as a pipeline for example.

In some preferable embodiments, the renewable energy storage apparatus comprises one selected from: a battery bank comprising one or more batteries; a secondary resource storage apparatus, which may comprise a hydrogen storage apparatus. In specific embodiments comprising hydrogen generation, a hydrogen storage tank may be provided.

In some preferable embodiments, the framework may comprise a lower portion and an upper portion; the platform having an in-use configuration wherein the lower portion is positioned below the surface of said body of water and the upper portion is positioned above the surface of the body of water. In the in-use configuration, the upper portion may be arranged to remain positioned above the surface of the body of water. It will be understood that the upper portion may therefore comprise a device or housing optimised for dry conditions, and therefore preferably remains above the surface of the body of water in-use. The housing may, for example, be a room housing controlling, operation or maintenance equipment. The upper portion of the framework may, in some embodiments comprise renewable energy device such as a wind turbine.

In some embodiments, one or more of the buoyancy members may comprise a said upper portion wherein, in an in-use configuration of the platform, the upper portion is positioned above the surface of the body of water. In said in-use configuration, the upper portion may be arranged to remain positioned above the surface of the body of water. Such an upper portion of the buoyancy member may comprise a renewable energy device such as a wind turbine, or any other suitable renewable energy device described herein, and may be particularly suitable for a hydrogen electrolyser.

In some preferable embodiments, two or more of the buoyancy members each comprise a said renewable energy device. Each said renewable energy device may be arranged to comprise a common orientation on the respective buoyancy member. Such embodiments may be optimised for orienting the renewable energy device according to a wave direction; a wind direction; or a tide direction. Such a common orientation across renewable energy devices therefore preferably maximises renewable energy capture and/or harnessing. In such embodiments, the renewable energy device is preferably a wave energy capturing and/or converting apparatus or system; a tidal turbine; and/or a wind turbine. In some preferable embodiments, one or more of said renewable energy devices comprise an orientation, which may be the common orientation discussed, and wherein the orientation is preferably freely adjustable. Such adjustment of the orientation may, for example, be performed manually or automatically by way of a control mechanism, and may be performed according to a change in wave direction, wind direction and/or tide direction. In embodiments wherein the renewable energy devices comprise an adjustable orientation, the renewable energy devices may comprise an orienting mechanism, such as a yaw mechanism arranged to rotate the renewable energy device about an axis.

In preferable embodiments, each buoyancy member comprises two or more buoyancy units. The two or more buoyancy units of a buoyancy member are preferably each positioned on a different adjacent framework edge extending from the corresponding vertex of the buoyancy member; and/or preferably positioned on the framework approximately equidistant from the corresponding vertex of the respective buoyancy member. In preferable embodiments, the two or more buoyancy units of a buoyancy member are proximate one another, and/or proximate the corresponding vertex. The term "proximate one another" will be understood to mean more proximate relative to a proximity to other buoyancy members. The term "proximate the corresponding vertex" will be understood to mean more proximate relative to a proximity to other such vertexes. Such proximity to each other or the vertex, or equidistance about the vertex, preferably provides a combined centre of buoyancy of the respective buoyancy member, which is preferably positioned at or proximate the corresponding vertex.

In some preferable embodiments, the two or more buoyancy units of a respective buoyancy member have a combined buoyancy defining a centre of buoyancy of the respective buoyancy member. The two or more buoyancy units are preferably positioned relative to the corresponding vertex of said buoyancy member such that the centre of buoyancy of the buoyancy member defines a centre of buoyancy of the corresponding vertex. The combined weight and buoyancy forces acting at the vertex in such embodiments preferably confers optimal stability to the platform in use.

In some preferable embodiments, at least one mooring member of a vertex is attached to the platform at a mooring point, the mooring point being positioned proximate, or at, the centre of buoyancy of the corresponding buoyancy member.

In preferable embodiments, the centre of buoyancy of the buoyancy member is defined by a location on a first plane parallel to the framework, and a second plane perpendicular to the framework, wherein the mooring point is positioned proximate, or at, the location of the centre of buoyancy of the corresponding buoyancy member in at least one of: the first plane; the second plane. In some preferable embodiments, said at least one mooring member is arranged to apply a tensioning force on the respective mooring point, the tensioning force acting in a plane parallel to the second plane, and proximate to or coplanar with the second plane. The mooring point preferably provides the tensioning force in a plane parallel to a plane occupied by a buoyancy force acting upon the platform at the centre of buoyancy. The tensioning force applied at the mooring point by the mooring member of a vertex therefore preferably counteracts the buoyancy acting at the centre of buoyancy of the corresponding buoyancy member. The parallel and proximate, and preferably coplanar, nature of said counteracting forces preferably provides optimal stability to the platform in use.

In preferable embodiments, the at least three vertexes form outer extremities of the framework. Positioning said vertexes and the corresponding buoyancy members at the outer extremities of the platform preferably confers optimal stability on the platform in-use. The at least three vertexes are preferably positioned in a common plane parallel to a plane of the framework.

In preferable embodiments, the at least three vertexes are substantially equidistant from a central axis of the framework and substantially equispaced around the central axis of the framework.

The framework may, in some embodiments, further comprise at least three non-buoyant vertexes, and at least three buoyant vertexes, wherein the at least three non-buoyant vertexes are present at a frequency equal to a frequency of the at least three buoyant vertexes. The at least three non-buoyant vertexes are preferably evenly distributed about the framework, interspaced about the periphery of the framework by one or more of said buoyant vertexes. It will be appreciated that the buoyant vertexes comprise a buoyancy member as described herein having a positive buoyancy, and that the non-buoyant vertexes either do not have a buoyancy member having a positive buoyancy, or comprise a buoyancy member having a net non-positive buoyancy, such as a neutral buoyancy or negative buoyancy.

Preferably, the wave energy convertor (WEC) may comprise a power take off convertor with an orbiting absorber and lever arm. More preferably, the WEC comprises a cylindrical absorber with four lever arm Power Take Off (PTO) units arranged with two lever arm PTO units on top of each of two buoyancy units of a respective buoyancy member.

Embodiments will be appreciated wherein two or more buoyancy members may comprise or support the same renewable energy device between them.

### Detailed Description

Embodiments of the present invention will now be described by way of example only and with reference to the accompanying drawings, in which:
FIG. 1 depicts a perspective view of the platform in accordance with the present claimed invention, in use, wherein each buoyancy member comprises a wave energy convertor system;
FIG. 2 depicts a perspective view of an alternative embodiment of the platform of FIG. 1, in use, wherein each buoyancy member comprises a wave energy convertor system and an upper portion of a framework of the platform comprises a wind turbine;
FIG. 3 depicts a perspective view of a further alternative embodiment of the platform of FIG. 1, in use, wherein each buoyancy member comprises a tidal turbine;
FIG. 4A depicts a top view of a vertex of a framework of the platform of FIG. 1, in use, deconstructed such that the renewable energy convertor is not shown;
FIG. 4B depicts a perspective view of a vertex of a framework of the platform of FIG. 1, in use, deconstructed such that the renewable energy convertor is not shown;
FIG. 5 depicts a perspective view of a further alternative embodiment of the platform of FIG. 1 in use, wherein each buoyancy member houses a corresponding renewable energy device therein;
FIG. 6 depicts a perspective view of a further alternative embodiment of the platform of FIG. 1 in use, wherein each buoyancy member houses a renewable energy device for hydrogen generation and storage;
FIG. 7 depicts a perspective view of a further alternative embodiment of the platform of FIG. 1 in use, wherein buoyancy members of the platform house a data storage apparatus;
FIG. 8 depicts a perspective view of a further alternative embodiment of the invention comprising six vertexes having wave and wind energy converters comprised thereon; and
FIG. 9 depicts a lateral view of the embodiment of FIG. 8 in use.

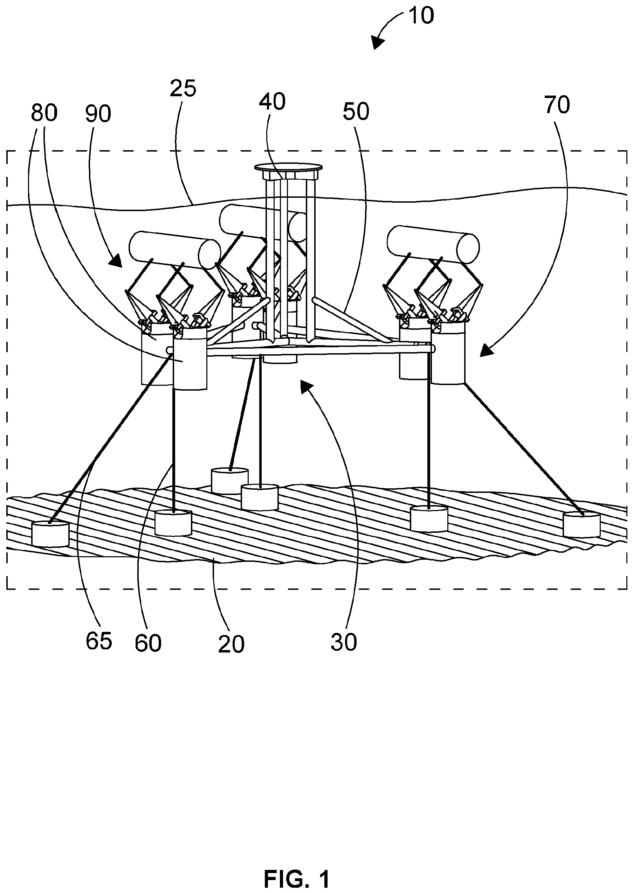

With reference to FIG. 1, there is illustrated an embodiment of the offshore platform 10 of the present claimed invention, in use, tethered to a bed 20 of a body of water. A portion of the platform 10 remains above a surface 25 of the body of water.

The platform 10 comprises a framework 30. The framework comprises an upper portion 40, which remains above the surface 25 of the body of water, and a lower portion 50 which remains below the surface 25 of the body of water. In alternative embodiments, all of the framework 30 remains below the surface 25 of the body of water in use.

The lower portion 50 of the framework 30 comprises a triangular base such that there are three distinct vertexes below the surface 25 of the body of water. Each vertex is equidistant from the central point of the triangle and each vertex is equispaced about the central point of the triangle, such that the base has the shape of an equilateral triangle. The framework 30 also comprises a central podium, which extends vertically upwards from the central point of the triangular base. The top section of this podium comprises the upper portion 40 of the framework 30, which extends above the surface 25 of the body of water. The podium is aligned with the central axis of the framework and is symmetrical about the central axis of the framework.

The upper portion 40 of the framework 30 may be used as an access point for the platform 10. Additionally, electrical, control and/or communication equipment may be housed on the upper portion 40, such that the equipment is not required to be suitable for prolonged submersion in the body of water.

Each vertex of the framework 30 comprises a pair of mooring members 60, 65 and a buoyancy member 70. In other embodiments, it is envisaged that one or a plurality of mooring members 60, 65 may be employed. The mooring members 60, 65 may comprise a mooring line, rope, chain or other suitable mooring means.

The mooring members 60, 65 tether the platform 10 to the bed 20 of the body of water or to other fixing means. In this way the mooring members 60, 65 prevent unwanted overturning, drifting, sinking or rising of the platform 10. The mooring members 60, 65 extend from each vertex of the framework 30 to the bed 20 of the body of water. On each vertex, an inner mooring member 60 extends vertically downwards to the bed 20 of the body of water. The outer mooring member 65 extends away from the framework 30 to the bed 25 along a horizontal line parallel to the axis where the vertex meets the central axis of the framework 30. Each pair of mooring members 60, 65 on each vertex has a complimentary pair on each other vertex. As such, the contact points these outer mooring members 65 make with the bed 25 form an equilateral triangle and all vertexes are in the same horizontal plane, parallel to the surface 25 of the body of water.

Additionally, the mooring members 60, 65 may comprise anchoring means that are fixed or removably retained in the bed 20 of the body of water. In this way the anchoring means assist in the mooring of the platform 10 to the bed 20.

Each buoyancy member 70 comprises two buoyancy tanks 80, such that there are six tanks 80 in total. Each tank 80 is filled with a gas, such as air or nitrogen, such that the tank 80 is less dense than water. The buoyancy tanks 80 provide a buoyant force upwards towards the surface 25 of the body of water. In some embodiments, it is possible to monitor and control the buoyant force provided by the buoyancy members 70, for example by removing or adding gas or fluid into the buoyancy tanks 80. It is appreciated that alternative buoyancy means may be employed which provide this buoyant force.

In use, tension is held in the mooring members 60, 65 due to the buoyant forces acting on the platform 10. The downwards gravitational pull of the platform 10 is exceeded by the upwards buoyant force of the platform 10. The buoyancy member's 70 provide the predominant upwards buoyant force to the platform 10.

The body of water, and other internal and external sources, will subject the platform 10 to numerous forces and moments, in use. It is desirable for the platform 10 to remain stable in use so that, for example, toppling of the platform 10 does not occur. Tension in the mooring members 60, 65 allows the three vertexes of the framework 30 to return to a horizontal plane, parallel to the surface 25 of the body of water after the platform 10 is subjected to forces and moments. In this way, the mooring members 60, 65 assist in stability of the platform 10.

In the embodiment illustrated, each buoyancy tank 80 is identical. Both buoyancy tanks 80 sit proximate to each other on the vertex of the framework 30. Each buoyancy tank 80 sits on either side of the vertex, symmetrically about the axis where the vertex meets the centre of the triangular base. Each pair of tanks 80 are braced to the framework 30 in a way such that relative motion of each tank 80 to the other is minimised. In this way, the structural behaviour of the two tanks 80 is similar to that of a single, larger tank, and the behaviour of the pair of tanks 80 can be effectively modelled as that of a single unit. The tanks 80 have a combined centre of buoyancy.

The tanks 80 are cylindrical and the longitudinal axis of each tank 80 is vertically upwards. In this way, the tanks 80 are less prone to toppling and rotating when subject to internal and external forces and moments given the shorter moment arm (lateral axis) of the tanks 80. It should be understood that other tank 80 geometries and shapes are envisaged.

The presence of more than one tank 80 provides the advantage that if damage or failure occurs in one tank 80, such as loss of buoyancy, at least one additional tank 80 remains on the vertex. This ensures the buoyancy of the overall platform 10 is not entirely compromised when failure of a tank 80 occurs. By ensuring each vertex has at least one additional buoyancy tank 80, the platform 10 is less prone to overturn or sink upon failure of a buoyancy tank 80, as a buoyant force is still being provided at every vertex. This reduces the likelihood of damage to or loss of function of the platform 10. Repair or replacement of the compromised tank 80 can then be undertaken to rebalance the platform 10.

Each buoyancy member 70 comprises a wave energy convertor system (WEC) 90. The WEC 90 may comprise a point absorber, an oscillating wave surge absorber, a submerged pressure differential absorber or another form of WEC technology.

The WEC 90 is connected to both buoyancy tanks 80. The WEC 90 is mounted above the buoyancy tanks 80, such that, in use, the WEC 90 sits between the buoyancy tanks 80 and the surface 25 of the body of water. In this way the WEC 90 does not interfere with the mooring members 60, 65. The WEC 90 is mounted centrally above the tanks 80, such that the longitudinal axis of the WEC 90 is parallel to the axis between the centre of each tank 80.

Any reasonable means for connecting the WEC 90 onto or proximal to one or both of the tanks 80 is envisaged, such as permanent or removable connection, rigid or deformable levers, lines or chains, or direct mounting on the tanks 80. Additionally, a connection between the WEC 90 and the framework 30 is envisaged. Components associated with converting energy from the WEC 90 may be mounted on or within the tanks 80 or on the framework 30.

Each WEC 90 is identical. In alternative embodiments, the WECs 90 may be non-identical. The WEC 90 is cylindrical with a longitudinal axis parallel to the surface 25 of the body of water. Each WEC 90 may rotate fully or partially about the longitudinal axis of the WEC 90. The WEC 90 is orientated such that its longitudinal axis is horizontal and parallel to the surface 25 of the body of water. In this way, the WEC 90 is aligned with the direction of current or flow of the water in the body of water. The angle the longitudinal axis of the WEC 90 makes with the surface 25 of the body of water and/or the angle the longitudinal axis of the WEC 90 makes with the framework 30 may be altered, such that the orientation of the WEC 90 is optimal for wave energy conversion purposes.

Each WEC 90 is orientated identically on each vertex. Alternatively, the orientation of each WEC 90 relative to each other WEC 90 is different, such that the capturing of wave energy is improved in each application.

Consideration may be taken to reduce the platform 10 weight such as to reduce the gravitational pull of the platform 10 towards the bed 20 of the body of water is preferential.

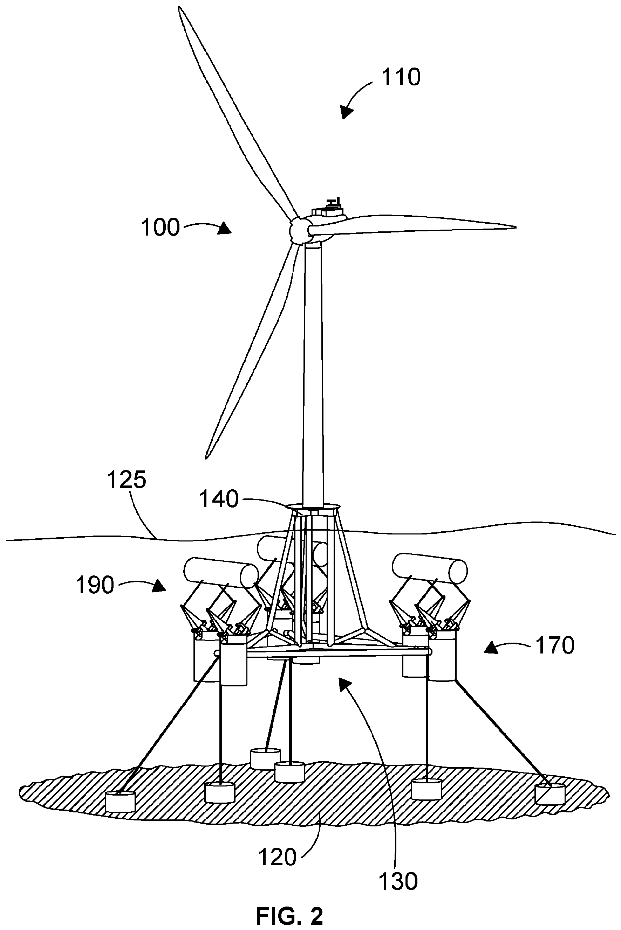

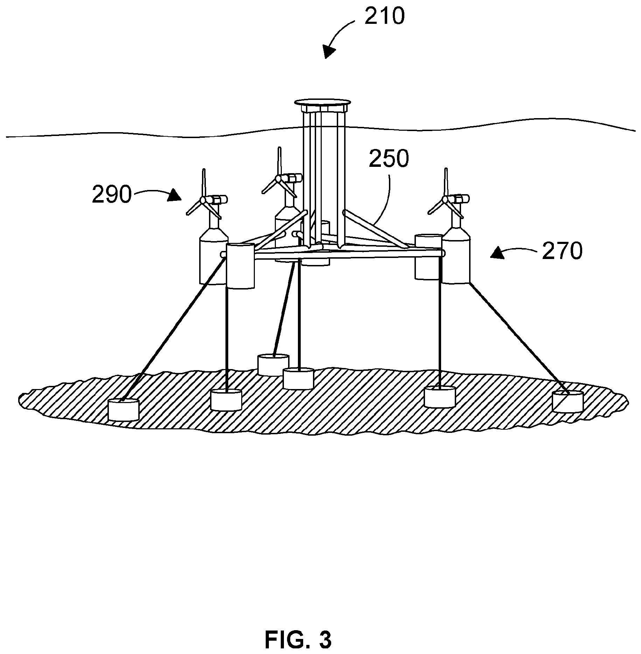

Turning now to FIGs 2 and 3 of the platform of the present invention, in the following description similar numerals will be used for similar parts of each embodiment of the present invention.

FIG. 2 depicts an embodiment of the present invention, wherein the platform 110 further comprises a turbine 100. The turbine 100 is mounted on the upper portion 140 of the framework 130, such that the turbine 100 remains above the surface 125 of the body of water, in use. The turbine 100 is mounted vertically upwards, perpendicular to the surface 125 of the body of water.

The buoyant force provided by the buoyancy members 170 is such that the considerable weight of the turbine 100 is supported. In this embodiment, reducing the platform 110 weight to reduce the gravitational pull of the platform 110 towards the bed 120 of the body of water is preferential.

In this embodiment, multiple forms of renewable energy convertors are present on the platform 110: a turbine 100 and WECs 190.

FIG. 3 depicts an embodiment of the present invention, wherein each buoyancy member 270 of the platform 210 comprises a tidal energy convertor (TEC) 290, for example a tidal turbine. Each TEC 290 may have an orientation that is fixed relative to the framework 250. Alternatively, each TEC 290 is able to yaw to face the direction of the current.

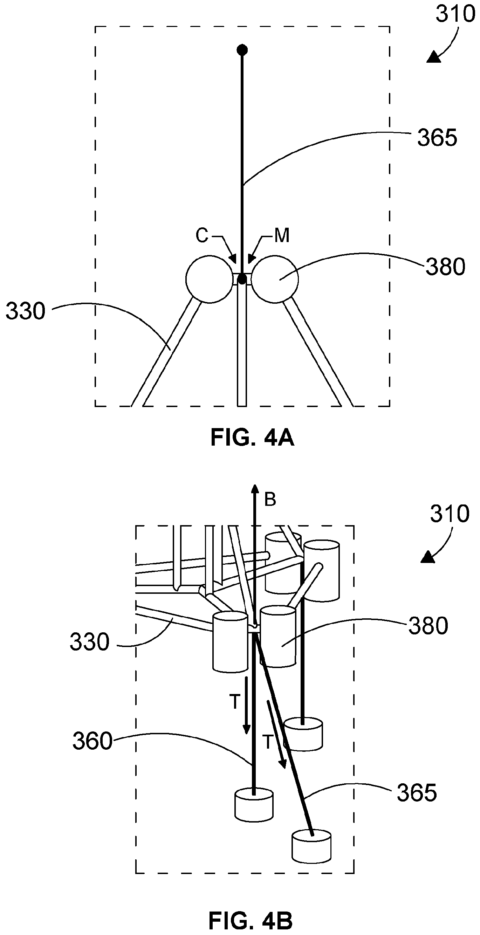

FIGs 4a and 4b depict the present claimed invention, with no renewable energy convertors shown. The buoyancy tanks 280 are spaced apart and symmetrically on the vertex about the axis where the vertex meets the central axis of the framework 330.

C indicates the combined centre of buoyancy of the buoyancy tanks 380. The centre of buoyancy point C is the effective point at which the buoyant force B from the tanks 380 act. The mooring members 360, 365 are attached to the framework 330 at a mooring point M. The mooring point M is the point at which the tension forces T from the mooring members 360, 365 act on the framework 330. The buoyant force B acts vertically upwards. The tension forces T act through the mooring members 360, 365.

The mooring point M and the centre of buoyancy C of the buoyancy tanks 380 are the same. In this way, the mooring point M and the centre of buoyancy C are in the same horizontal and vertical planes.

As the buoyant force B and tension forces T act at the same point (the centre of buoyancy C and the mooring point M), no moment from the buoyant force B and tension forces T acts on the platform 310. Such moments are disadvantageous as they can cause high structural loads and hinder platform stability. It is appreciated that a moment will result due to each individual buoyant force from each tank 380, however, each tanks 380 proximate position to the other of the pair of tanks 380 on the framework 380 reduces this moment.

In a further embodiment of the present invention, the platform comprises two vertexes, such that the vertexes are in a line parallel to the surface of the body of water. In this way, the buoyancy members are horizontally spaced apart from each other.

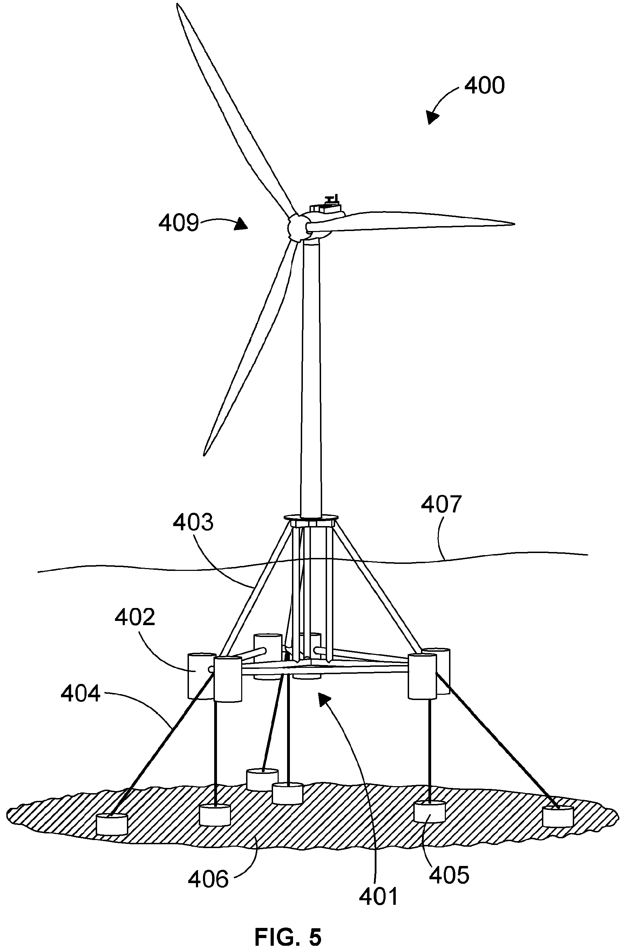

Referring to FIG. 5, a further example embodiment of a platform 400 in accordance with the present invention is shown, similar top the embodiment of FIG. 2. In FIG. 5, the platform 400 comprises a wind turbine 409. The turbine 409 is mounted on the upper portion of the framework 401, such that the turbine 409 remains above the surface 407 of the body of water, in use. The turbine 409 is mounted vertically upwards, perpendicular to the surface 407 of the body of water.

The buoyant force provided by the buoyancy members 402 is such that the considerable weight of the turbine 409 is supported. In this embodiment, reducing the platform 401 weight to reduce the gravitational pull of the platform 401 towards the bed 406 of the body of water is preferential, hence the skeletal frame structure. The upper portion of the platform 401 is supported partially by diagonally extending frame members 403 linking the upper portion to each of three vertexes of the frame work 401, thereby partially distributing the weight of the turbine 409 to the vertexes, at which the buoyancy tanks 402 exert a counteracting buoyancy force. As with previous embodiments, each vertex is tethered to the bed 406 by a set of mooring lines 404 and anchors 405. The mooring lines 404 exert a tensioning force to the mooring point at which the mooring lines are connected to the vertex, providing a counteracting force to the combined centre of buoyancy of the buoyancy tanks 402, the tensioning force and at least part of the weight of the turbine 409 in the embodiment shown being applied coplanar with the buoyancy force thereby minimising residual internal forces acting on the platform 401.

In this embodiment, the buoyancy tanks each comprise an renewable energy storage unit (not shown) housed therein.

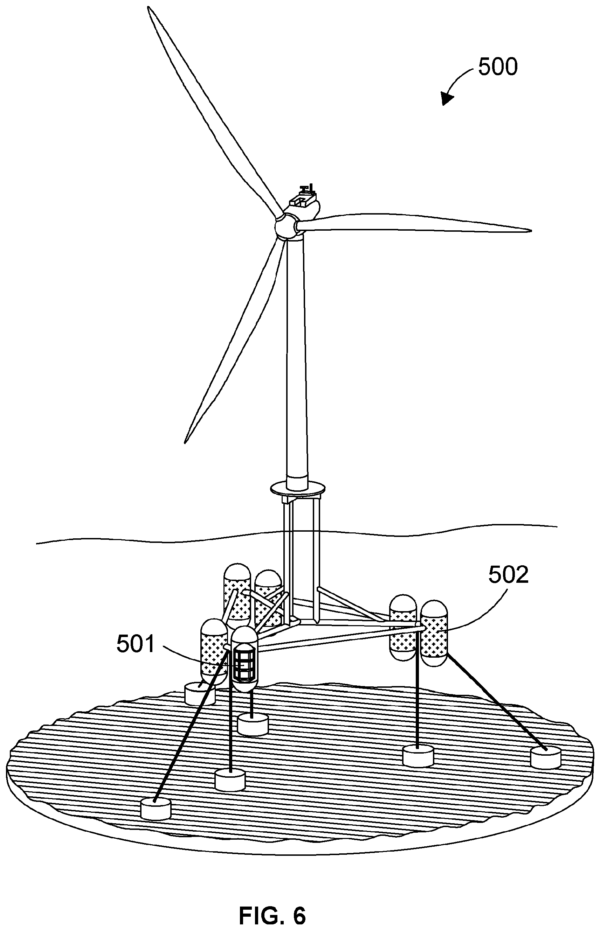

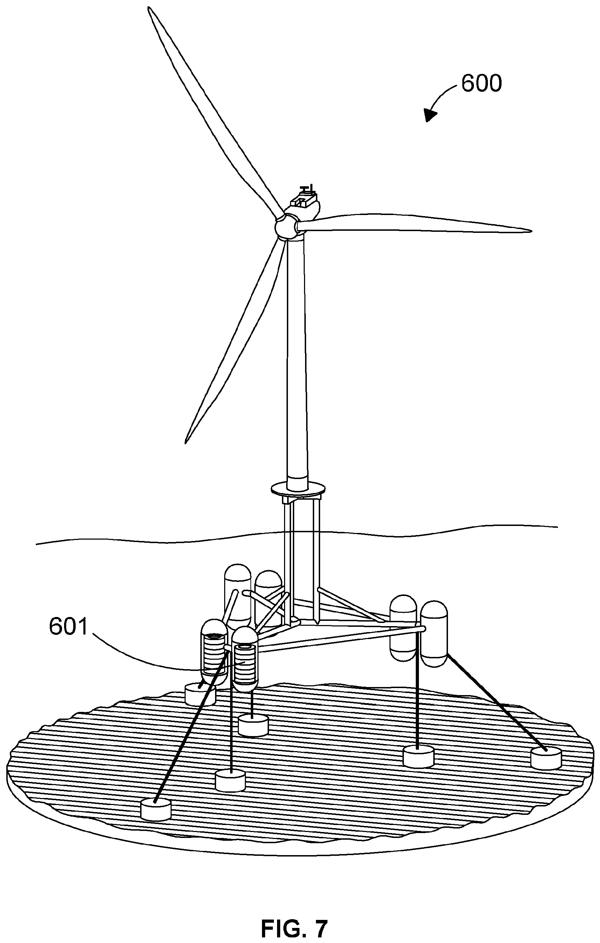

The embodiments of FIG. 6 and FIG. 7 are substantially equal to the embodiment described for FIG. 5. The embodiment 500 of FIG. 6 replaces the energy storage units for a hydrogen electrolyser 501 and a hydrogen storage tank 502 arranged to receive and store the hydrogen from the electrolyser 501 by way of pipes concealed within the skeletal framework of the platform. The electrolyser, in the embodiment shown, is powered by electrical energy provided by the wind turbine. In the embodiment shown, the storage tank 502 can be routinely collected and replaced, or the hydrogen therein detanked into a mobile gas transportation vessel. Embodiments will be appreciated wherein the platform comprises a gas pipe leaving the platform and arranged to convey the gas from the storage tank 502. The embodiment 600 of FIG. 7 replaces the energy storage units of FIG. 5 for data storage units 601 arranged to receive usage data from data collectors located on the platform (not shown). The data collectors may, for example, collect data about the functioning of the wind turbine and/or the sea conditions, which may be used to inform a modification made, for example to the height of the platform in the body of water.

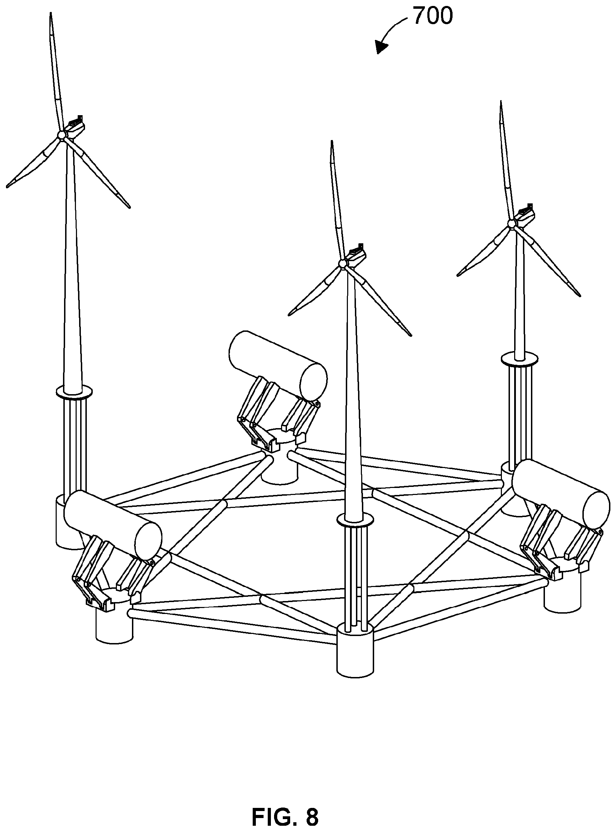

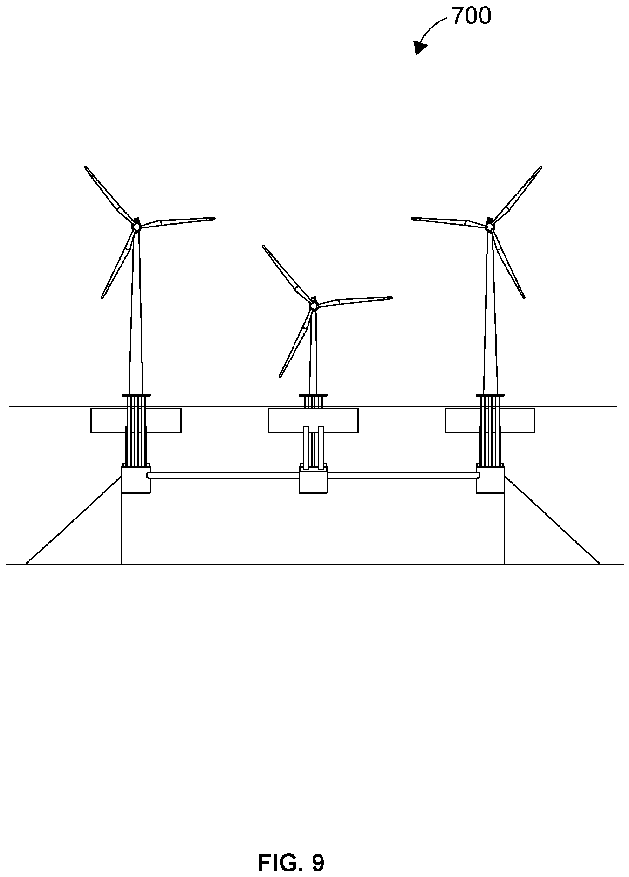

The embodiment 700 of FIG. 8 and FIG. 9 comprises a platform having six buoyant vertexes forming a hexagonal platform. A buoyancy tank of each other vertex supports a raised upper portion thereon comprising a wind turbine arranged to remain above the surface of the body of water. The remaining buoyancy tanks at each remaining vertex supports a WEC as described previously. In the embodiment 700 shown, two pairs of opposing vertexes of the six vertexes comprise mooring lines extending therefrom anchoring the platform to the bed of the body of water. In the embodiment shown, the equal dispersal of a large amount of weight from the wind turbines and WECs is sufficient in order to counteract the buoyancy of the corresponding buoyancy tanks with only set of mooring lines. Embodiments will be appreciated wherein the platform comprises three sets of mooring lines positioned at three of the six vertexes and evenly spaced about the platform. Other embodiments will be appreciated wherein each of the vertexes comprises its own set of one or more mooring lines. The use of a larger number of below and above water platforms may allow for a greater number and/or a larger size of renewable energy devices (or processors or storage) to be housed by the platform, increasing its energy output.

The wind turbine towers of the embodiment 700 may be of different heights to mitigate against the turbines shadowing each other in certain wind directions, improving energy yield from the platform.

Further embodiments within the scope of the present invention may be envisaged that have not been described above, for example, there may be any combination of renewable energy convertors on the platform including, but not limited to, WECs and TECs. One, multiple or all vertexes may comprise a renewable energy convertor. The platform may comprise a number of non-buoyant vertexes which do not comprise buoyancy members. These non-buoyant vertexes may be aligned in the same horizontal plane as the buoyant vertexes, or in an offset plane. These non-buoyant vertexes may comprise renewable energy convertors. The framework may comprise a single body piece or may be assembled form a number of pieces. The invention is not limited to the specific examples or structures illustrated.

## Claims

1. A buoyant offshore renewable energy system mounting platform (10) for positioning a renewable energy device (90) in a body of water, said body of water comprising a surface (25) and a bed (20), said platform (10) comprising:
a framework (30) comprising at least three vertexes;
at least two of said at least three vertexes having at least one mooring member (60, 65) for positioning said platform (10) relative to said surface (25) and bed (20) of said body of water; and
each of said at least three vertexes having a buoyancy member (70) ; wherein at least one of said buoyancy members houses a renewable energy device (90) at least partially accommodated therewithin, the renewable energy device (90) selected from the group of: a renewable energy convertor; a renewable energy harnessing apparatus; a renewable energy processing apparatus; a renewable energy storing apparatus; a renewable energy data capture apparatus; a data storing apparatus;
**characterised in that** the renewable energy device (90) is engaged with the corresponding at least one buoyancy member (70) by an engagement means, the renewable energy device (90) being removable from the buoyancy member (70) by way of the engagement means; and
wherein the engagement means is configured such that, following said removal, a different renewable energy device (90) selected from the group is arranged to be engaged with the corresponding at least one buoyancy member (70) by the engagement means.

2. A platform (10) as claimed in claim 1, wherein one or more of:
i. said renewable energy convertor comprises one selected from: a wave energy convertor system; a tidal energy convertor system; a wind energy convertor system;
ii. said renewable energy harnessing apparatus comprises one selected from: a wave energy convertor; a tidal energy converter; a wind energy converter;
iii. the renewable energy processing apparatus comprises a hydrogen electrolyser.

3. A (10) platform as claimed in any one of claims 1 or claim 2, wherein the renewable energy storing apparatus comprises one selected from: a battery bank comprising one or more batteries; a hydrogen storage apparatus.

4. A platform (10) as claimed in any one of the preceding claims, wherein the framework (30) comprises a lower portion (50) and an upper portion (40); the platform (10) having an in-use configuration wherein the lower portion (50) is positioned below the surface (25) of said body of water and the upper portion (40) is positioned above the surface (25) of the body of water; and wherein in the in-use configuration, the upper portion (40) is arranged to remain positioned above the surface (25) of the body of water;
and preferably wherein the upper portion (40) of the framework (30) comprises a wind turbine.

5. A platform (10) as claimed in any one of the preceding claims, wherein two or more of the buoyancy members (70) each comprise a said renewable energy device (90);
and preferably wherein each said renewable energy device (90) is arranged to comprise a common orientation on the respective buoyancy member (70);
and preferably wherein the orientation is freely adjustable.

6. A platform (10) as claimed in any one of the preceding claims, wherein each buoyancy member (70) comprises two or more buoyancy units.

7. A platform (10) as claimed in claim 6, wherein the two or more buoyancy units are each positioned on the framework (30) approximately equidistant from the corresponding vertex of the respective buoyancy member (70).

8. A platform (10) as claimed in claim 6 or claim 7, wherein the two or more buoyancy units of a buoyancy member (70) are proximate one another.

9. A platform (10) as claimed in claims 6, claim 7 or claim 8, wherein the two or more buoyancy units of a respective buoyancy member (70) have a combined buoyancy defining a centre of buoyancy of the respective buoyancy member.

10. A platform (10) as claimed in claim 9, wherein the two or more buoyancy units are positioned relative to the corresponding vertex of said buoyancy member (70) such that the centre of buoyancy of the buoyancy member defines a centre of buoyancy of the corresponding vertex.

11. A platform (10) as claimed in claim 9 or claim 10, wherein said at least one mooring member (60, 65) of a vertex is attached to the platform at a mooring point, the mooring point being positioned proximate, or at, the centre of buoyancy of the corresponding buoyancy member (70);
and preferably wherein the centre of buoyancy of the buoyancy member (70) is defined by a location on a first plane parallel to the framework (30), and a second plane perpendicular to the framework (30), wherein the mooring point is positioned proximate, or at, the location of the centre of buoyancy of the corresponding buoyancy member (70) in at least one of: the first plane; the second plane;
and preferably wherein said at least one mooring member (60, 65) is arranged to apply a tensioning force on the respective mooring point, the tensioning force acting in a plane parallel to the second plane, and proximate to or coplanar with the second plane.

12. A platform (10) as claimed in any one of the preceding claims, wherein the at least three vertexes form outer extremities of the framework (30).

13. A platform (10) as claimed in any one of the preceding claims, wherein the at least three vertexes are positioned in a common plane parallel to a plane of the framework (30).

14. A platform (10) as claimed in any one of the preceding claims, wherein the at least three vertexes are substantially equidistant from a central axis of the framework (30) and substantially equispaced around the central axis of the framework (30).

15. A platform (10) as claimed in any one of the preceding claims, wherein the framework (30) further comprises at least three non-buoyant vertexes, and at least three buoyant vertexes, wherein the at least three non-buoyant vertexes are present at a frequency equal to a frequency of the at least three buoyant vertexes.

## Patentansprüche

1. Eine schwimmende Montageplattform (10) für ein Offshore-System für erneuerbare Energie zur Positionierung einer Vorrichtung (90) für erneuerbare Energie in einem Wasserkörper, wobei der Wasserkörper eine Oberfläche (25) und einen Grund (20) beinhaltet, wobei die Plattform (10) Folgendes beinhaltet:
einen Rahmen (30), der mindestens drei Eckpunkte beinhaltet;
wobei mindestens zwei der mindestens drei Eckpunkte mindestens ein Verankerungselement (60, 65) zum Positionieren der Plattform (10) relativ zu der Oberfläche (25) und dem Grund (20) des Wasserkörpers aufweisen; und
jeder der mindestens drei Eckpunkte ein Auftriebselement (70) aufweist; wobei
mindestens eines der Auftriebselemente eine Vorrichtung (90) für erneuerbare Energie beherbergt, die mindestens zum Teil darin untergebracht ist, wobei die Vorrichtung (90) für erneuerbare Energie aus der Gruppe ausgewählt ist, die aus Folgendem besteht:
einem Konverter für erneuerbare Energie; einem Gerät zur Nutzung erneuerbarer Energie; einem Gerät zur Verarbeitung erneuerbarer Energie; einem Gerät zur Speicherung erneuerbarer Energie; einem Gerät zur Erfassung von Daten über erneuerbare Energie; einem Gerät zur Speicherung von Daten;
**dadurch gekennzeichnet, dass** die Vorrichtung (90) für erneuerbare Energie mit dem entsprechenden mindestens einen Auftriebselement (70) mittels eines Eingriffsmittels in Eingriff steht, wobei die Vorrichtung (90) für erneuerbare Energie durch das Eingriffsmittel von dem Auftriebselement (70) entfernbar ist; und
wobei das Eingriffsmittel so konfiguriert ist, dass nach der Entfernung eine andere aus der Gruppe ausgewählte Vorrichtung (90) für erneuerbare Energie so angeordnet ist,
dass sie mit dem entsprechenden mindestens einen Auftriebselement (70) mittels des Eingriffsmittels in Eingriff steht.

2. Plattform (10) gemäß Anspruch 1, wobei eines oder mehrere von Folgendem gelten:
i. der Konverter für erneuerbare Energie beinhaltet eines, das aus Folgendem ausgewählt ist: einem Wellenenergie-Konvertersystem; einem Gezeitenenergie-Konvertersystem; einem Windenergie-Konvertersystem;
ii. das Gerät zur Nutzung erneuerbarer Energien beinhaltet eines, das aus Folgendem ausgewählt ist: einem Wellenenergie-Konverter, einem Gezeitenenergie-Konverter, einem Windenergie-Konverter;
iii. das Gerät zur Verarbeitung erneuerbarer Energie beinhaltet einen Wasserstoff-Elektrolyseur.

3. Plattform (10) gemäß einem der Ansprüche 1 oder 2, wobei das Gerät zur Speicherung erneuerbarer Energie eines beinhaltet, das aus Folgendem ausgewählt ist: einer Batteriebank, die eine oder mehrere Batterien beinhaltet; einem
Wasserstoffspeichergerät.

4. Plattform (10) gemäß einem der vorhergehenden Ansprüche, wobei der Rahmen (30) einen unteren Abschnitt (50) und einen oberen Abschnitt (40) beinhaltet; wobei die Plattform (10) eine In-Gebrauch-Konfiguration aufweist, bei der der untere Abschnitt (50) unterhalb der Oberfläche (25) des Wasserkörpers positioniert ist und der obere Abschnitt (40) oberhalb der Oberfläche (25) des Wasserkörpers positioniert ist; und wobei in der In-Gebrauch-Konfiguration der obere Abschnitt (40) so angeordnet ist, dass er oberhalb der Oberfläche (25) des Wasserkörpers positioniert bleibt;
und wobei der obere Abschnitt (40) des Rahmens (30) vorzugsweise eine Windturbine beinhaltet.

5. Plattform (10) gemäß einem der vorhergehenden Ansprüche, wobei zwei oder mehr der Auftriebselemente (70) jeweils eine Vorrichtung (90) für erneuerbare Energie beinhalten;
und wobei vorzugsweise jede Vorrichtung (90) für erneuerbare Energie so angeordnet ist, dass sie eine gemeinsame Ausrichtung auf dem jeweiligen Auftriebselement (70) beinhaltet;
und wobei die Ausrichtung vorzugsweise frei einstellbar ist.

6. Plattform (10) gemäß einem der vorhergehenden Ansprüche, wobei jedes Auftriebselement (70) zwei oder mehr Auftriebseinheiten beinhaltet.

7. Plattform (10) gemäß Anspruch 6, wobei die zwei oder mehr Auftriebseinheiten jeweils auf dem Rahmen (30) etwa äquidistant zu dem entsprechenden Eckpunkt des jeweiligen Auftriebselements (70) positioniert sind.

8. Plattform (10) gemäß Anspruch 6 oder Anspruch 7, wobei die zwei oder mehr Auftriebseinheiten eines Auftriebselements (70) nahe beieinander liegen.

9. Plattform (10) gemäß Anspruch 6, Anspruch 7 oder Anspruch 8, wobei die zwei oder mehr Auftriebseinheiten eines jeweiligen Auftriebselements (70) einen kombinierten Auftrieb aufweisen, der einen Auftriebsmittelpunkt des jeweiligen Auftriebselements definiert.

10. Plattform (10) gemäß Anspruch 9, wobei die zwei oder mehr Auftriebseinheiten relativ zu dem entsprechenden Eckpunkt des Auftriebselements (70) so positioniert sind, dass der Auftriebsmittelpunkt des Auftriebselements einen Auftriebsmittelpunkt des entsprechenden Eckpunkts definiert.

11. Plattform (10) gemäß Anspruch 9 oder Anspruch 10, wobei das mindestens eine Verankerungselement (60, 65) eines Eckpunkts an der Plattform an einem Verankerungspunkt befestigt ist, wobei der Verankerungspunkt in der Nähe oder an dem Auftriebsmittelpunkt des entsprechenden Auftriebselements (70) positioniert ist; und wobei der Auftriebsmittelpunkt des Auftriebselements (70) vorzugsweise durch eine Stelle in einer ersten Ebene parallel zu dem Rahmen (30) und einer zweiten Ebene senkrecht zu dem Rahmen (30) definiert ist, wobei der Verankerungspunkt in der Nähe oder an der Stelle des Auftriebsmittelpunkts des entsprechenden Auftriebselements (70) in mindestens einer von Folgendem positioniert ist: der ersten Ebene; der zweiten Ebene;
und wobei das mindestens eine Verankerungselement (60, 65) vorzugsweise so angeordnet ist, dass es eine Spannkraft auf den jeweiligen Verankerungspunkt ausübt, wobei die Spannkraft in einer Ebene parallel zu der zweiten Ebene und in der Nähe der zweiten Ebene oder koplanar mit dieser wirkt.

12. Plattform (10) gemäß einem der vorhergehenden Ansprüche, wobei die mindestens drei Eckpunkte äußere Enden des Rahmens (30) bilden.

13. Plattform (10) gemäß einem der vorhergehenden Ansprüche, wobei die mindestens drei Eckpunkte in einer gemeinsamen Ebene parallel zu einer Ebene des Rahmens (30) positioniert sind.

14. Plattform (10) gemäß einem der vorhergehenden Ansprüche, wobei die mindestens drei Eckpunkte im Wesentlichen äquidistant von einer Mittelachse des Rahmens (30) entfernt und im Wesentlichen abstandsgleich um die Mittelachse des Rahmens (30) herum befindlich sind.

15. Plattform (10) gemäß einem der vorhergehenden Ansprüche, wobei der Rahmen (30) ferner mindestens drei nicht schwimmende Eckpunkte und mindestens drei schwimmende Eckpunkte beinhaltet, wobei die mindestens drei nicht schwimmenden Eckpunkte mit einer Frequenz vorliegen, die gleich einer Frequenz der mindestens drei schwimmenden Eckpunkte ist.

## Revendications

1. Une plateforme (10) de montage de système d'énergie renouvelable en mer flottante servant à positionner un dispositif d'énergie renouvelable (90) dans un plan d'eau, ledit plan d'eau comprenant une surface (25) et un lit (20), ladite plateforme (10) comprenant :
une armature (30) comprenant au moins trois sommets :
au moins deux desdits au moins trois sommets ayant au moins un organe d'amarrage (60, 65) servant à positionner ladite plateforme (10) par rapport à ladite surface (25) et audit lit (20) dudit plan d'eau ; et
chacun desdits au moins trois sommets ayant un organe de flottabilité (70) ; où au moins l'un desdits organes de flottabilité accueille un dispositif d'énergie renouvelable (90) logé au moins en partie en son sein, le dispositif d'énergie renouvelable (90) étant sélectionné dans le groupe constitué : d'un convertisseur d'énergie renouvelable ; d'un appareil de captage d'énergie renouvelable ; d'un appareil de traitement d'énergie renouvelable ; d'un appareil de stockage d'énergie renouvelable ; d'un appareil de capture de données d'énergie renouvelable ; d'un appareil de stockage de données ;
**caractérisée en ce que** le dispositif d'énergie renouvelable (90) est en prise avec l'au moins un organe de flottabilité (70) correspondant grâce à un moyen de mise en prise, le dispositif d'énergie renouvelable (90) pouvant être retiré de l'organe de flottabilité (70) par le biais du moyen de mise en prise ; et
où le moyen de mise en prise est configuré de sorte que, à la suite dudit retrait, un dispositif d'énergie renouvelable (90) différent sélectionné dans le groupe est agencé pour être mis en prise avec l'au moins un organe de flottabilité (70) correspondant grâce au moyen de mise en prise.

2. Une plateforme (10) telle que revendiquée dans la revendication 1, où :
i. ledit convertisseur d'énergie renouvelable comprend un convertisseur sélectionné parmi : un système de conversion de l'énergie houlomotrice ; un système de conversion de l'énergie marémotrice ; un système de conversion de l'énergie éolienne ; et/ou
ii. ledit appareil de captage d'énergie renouvelable comprend un appareil sélectionné parmi : un convertisseur de l'énergie houlomotrice ; un convertisseur de l'énergie marémotrice ; un convertisseur de l'énergie éolienne ; et/ou
iii. l'appareil de traitement d'énergie renouvelable comprend un électrolyseur d'hydrogène.

3. Une plateforme (10) telle que revendiquée dans l'une quelconque des revendications 1 et 2, où l'appareil de stockage d'énergie renouvelable comprend un appareil sélectionné parmi : un banc de batteries comprenant une ou plusieurs batteries ; un appareil de stockage d'hydrogène.

4. Une plateforme (10) telle que revendiquée dans l'une quelconque des revendications précédentes, où l'armature (30) comprend une portion inférieure (50) et une portion supérieure (40) ; la plateforme (10) ayant une configuration en service dans laquelle la portion inférieure (50) est positionnée en dessous de la surface (25) dudit plan d'eau et la portion supérieure (40) est positionnée au-dessus de la surface (25) du plan d'eau ;
et où dans la configuration en service, la portion supérieure (40) est agencée pour rester positionnée au-dessus de la surface (25) du plan d'eau ;
et de préférence où la portion supérieure (40) de l'armature (30) comprend une éolienne.

5. Une plateforme (10) telle que revendiquée dans l'une quelconque des revendications précédentes, où deux ou plus de deux des organes de flottabilité (70) comprennent chacun un dit dispositif d'énergie renouvelable (90) ;
et de préférence où chaque dit dispositif d'énergie renouvelable (90) est agencé pour comprendre une orientation commune sur l'organe de flottabilité (70) respectif ;
et de préférence où l'orientation est à réglage libre.

6. Une plateforme (10) telle que revendiquée dans l'une quelconque des revendications précédentes, où chaque organe de flottabilité (70) comprend deux ou plus de deux unités de flottabilité.

7. Une plateforme (10) telle que revendiquée dans la revendication 6, où les deux ou plus de deux unités de flottabilité sont chacune positionnées sur l'armature (30) de façon approximativement équidistante du sommet correspondant de l'organe de flottabilité (70) respectif.

8. Une plateforme (10) telle que revendiquée dans la revendication 6 ou la revendication 7, où les deux ou plus de deux unités de flottabilité d'un organe de flottabilité (70) sont à proximité l'une de l'autre.

9. Une plateforme (10) telle que revendiquée dans la revendication 6, la revendication 7 ou la revendication 8, où les deux ou plus de deux unités de flottabilité d'un organe de flottabilité (70) respectif ont une flottabilité combinée définissant un centre de flottabilité de l'organe de flottabilité respectif.

10. Une plateforme (10) telle que revendiquée dans la revendication 9, où les deux ou plus de deux unités de flottabilité sont positionnées par rapport au sommet correspondant dudit organe de flottabilité (70) de sorte que le centre de flottabilité de l'organe de flottabilité définit un centre de flottabilité du sommet correspondant.

11. Une plateforme (10) telle que revendiquée dans la revendication 9 ou la revendication 10, où ledit au moins un organe d'amarrage (60, 65) d'un sommet est fixé à la plateforme au niveau d'un point d'amarrage, le point d'amarrage étant positionné à proximité, ou au niveau, du centre de flottabilité de l'organe de flottabilité (70) correspondant ;
et de préférence où le centre de flottabilité de l'organe de flottabilité (70) est défini par un emplacement sur un premier plan parallèle à l'armature (30), et un deuxième plan perpendiculaire à l'armature (30), où le point d'amarrage est positionné à proximité, ou au niveau, de l'emplacement du centre de flottabilité de l'organe de flottabilité (70) correspondant dans au moins soit le premier plan, soit le deuxième plan ;
et de préférence où ledit au moins un organe d'amarrage (60, 65) est agencé pour appliquer une force de tension sur le point d'amarrage respectif, la force de tension agissant dans un plan parallèle au deuxième plan, et à proximité du deuxième plan ou coplanaire avec celui-ci.

12. Une plateforme (10) telle que revendiquée dans l'une quelconque des revendications précédentes, où les au moins trois sommets forment des extrémités externes de l'armature (30).

13. Une plateforme (10) telle que revendiquée dans l'une quelconque des revendications précédentes, où les au moins trois sommets sont positionnés dans un plan commun parallèle à un plan de l'armature (30).

14. Une plateforme (10) telle que revendiquée dans l'une quelconque des revendications précédentes, où les au moins trois sommets sont substantiellement équidistants d'un axe central de l'armature (30) et espacés de façon substantiellement égale autour de l'axe central de l'armature (30).

15. Une plateforme (10) telle que revendiquée dans l'une quelconque des revendications précédentes, où l'armature (30) comprend en outre au moins trois sommets non flottants, et au moins trois sommets flottants, où les au moins trois sommets non flottants sont présents à une fréquence égale à une fréquence des au moins trois sommets flottants.
